(19) Europäisches Patentamt
European Patent Office
Office européen des brevets

(11) **EP 4 151 386 B1**

(12) **EUROPÄISCHE PATENTSCHRIFT**

(45) Veröffentlichungstag und Bekanntmachung des Hinweises auf die Patenterteilung:
**21.02.2024   Patentblatt 2024/08**

(21) Anmeldenummer: **22190405.5**

(22) Anmeldetag: **15.08.2022**

(51) Internationale Patentklassifikation (IPC):
***B29C 45/76*** *(2006.01)*

(52) Gemeinsame Patentklassifikation (CPC):
**B29C 45/766; B29C 45/7653;** B29C 2945/761;
B29C 2945/76254; B29C 2945/76391;
B29C 2945/76505; B29C 2945/76702;
B29C 2945/76869; B29C 2945/76936

(54) **VERFAHREN ZUM EINSTELLEN DER SCHLIESSKRAFT EINES WERKZEUGS EINER KUNSTSTOFFVERARBEITUNGSMASCHINE, INSBESONDERE EINER SPRITZGIESSMASCHINE**

METHOD FOR ADJUSTING THE CLOSING FORCE OF A TOOL OF A PLASTIC PROCESSING MACHINE, IN PARTICULAR AN INJECTION MOULDING MACHINE

PROCÉDÉ DE RÉGLAGE DE LA FORCE DE FERMETURE D'UN OUTIL D'UNE MACHINE DE TRAITEMENT DES MATIÈRES PLASTIQUES, EN PARTICULIER D'UNE MACHINE DE MOULAGE PAR INJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2021   DE 102021123917**

(43) Veröffentlichungstag der Anmeldung:
**22.03.2023   Patentblatt 2023/12**

(73) Patentinhaber: **Wittmann Battenfeld GmbH 2542 Kottingbrunn (AT)**

(72) Erfinder:
• **Chromy, Patrick
  1030 Wien (AT)**
• **Pearson, Ben
  1120 Wien (AT)**

(74) Vertreter: **Gosdin, Carstensen & Partner Patentanwälte Partnerschaftgesellschaft mbB Adam-Stegerwald-Straße 6 97422 Schweinfurt (DE)**

(56) Entgegenhaltungen:
DE-A1-102011 076 041     DE-A1-102015 000 219

EP 4 151 386 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Einstellen der Schließkraft eines Werkzeugs einer Kunststoffverarbeitungsmaschine, insbesondere einer Spritzgießmaschine, wobei das Werkzeug eine Federkonstante aufweist, so dass sich bei der Beaufschlagung des Werkzeugs mit der Schließkraft eine Werkzeugverformung ergibt.

Beim Betrieb einer Kunststoffverarbeitungsmaschine wird vor dem Einspritzen von Kunststoffmaterial in das Werkzeug dasselbe durch die Schließkraft beaufschlagt und hierdurch zugehalten. Das Kunststoffmaterial wird dabei unter hohem Druck eingebracht. Die Schließkraft muss so gewählt werden, dass das Werkzeug stets geschlossen bleibt, bis das Kunststoffmaterial verfestigt ist.

Beim Spritzgießen übt die Plastifiziereinheit während des Einspritzens und der Nachdruckphase eine Auftreibkraft auf das Werkzeug aus. Die Schließeinheit hält dieser Auftreibkraft mit der Schließkraft entgegen. Ist die Auftreibkraft größer als die Schließkraft, öffnet sich das Werkzeug unkontrolliert und der Prozess wird instabil. Die Schließkraft muss somit größer als die Auftreibkraft gewählt werden.

Es ist relativ zeitaufwendig, die optimale Schließkraft des Werkzeugs einzustellen. Daher wird zumeist mit der maximalen Schließkraft der Maschine gearbeitet, um das Werkzeug zuverlässig geschlossen zu halten. Dies ist allerdings mit Blick auf den Werkzeug- und Maschinenverschleiß nicht sehr günstig.

Optimal wäre, die Schließkraft - unter Berücksichtigung eines gewissen Sicherheitspuffers - so nah wie möglich an die Auftreibkraft heranzubringen, um den Prozess so robust wie möglich zu halten.

Dabei sind Lösungen bekannt geworden, von denen eine beispielsweise in der DE 10 2014 014 232 B4 beschrieben ist. Hier wird in einem Trockenlauf ein Referenzzyklus gefahren, der Aufschluss über den Kraft- bzw. Wegverlauf des Werkzeugs gibt, wobei die Federkonstante, also die Federsteifigkeit, des Werkzeugs berücksichtigt wird. Hierdurch kann auf den Kraft- bzw. Wegverlauf im Betrieb der Maschine rückgerechnet werden, wobei hieraus dann die Bestimmung der optimalen Schließkraft erfolgen kann.

Nachteilig ist bei diesem Verfahren, das zunächst im Vorfeld des eigentlichen Fertigungsvorgangs ein entsprechender Trockenlauf erforderlich ist, um die benötigten Daten zu erfassen.

Die US 2006/0197248 A1 offenbart ein Verfahren zur Überwachung der Werkzeugklemmkraft in einer Spritzgießmaschine, wobei eine Nachjustierung der Klemmkraft erfolgt, wenn im Verlauf der Fertigung einer Vielzahl von Formteilen Abweichungen von einer Sollkraft festgestellt werden.

Der Erfindung liegt die **Aufgabe** zugrunde, ein Verfahren der eingangs genannten Art so fortzubilden, dass ohne weitere vorbereitende Maßnahmen im Fertigungsprozess selber eine optimale Schließkraft gefunden werden kann, mit der das Werkzeug zuverlässig geschlossen bleibt, die allerdings die Maschine nicht über Gebühr belastet.

Die **Lösung** dieser Aufgabe durch die Erfindung ist dadurch gekennzeichnet, dass das Verfahren die folgenden Schritte umfasst:

a) in einem ersten Fertigungszyklus: Schließen des Werkzeugs mit einer nominalen Ausgangs-Schließkraft und Erfassung der hierdurch hervorgerufenen Werkzeugverformung und Berechnung der durch die Werkzeugverformung eingebrachten Verformungsarbeit (Energiedifferenz zwischen dem noch nicht verformten und dem maximal verformten Werkzeug);

b) in einem nachfolgenden weiteren Fertigungszyklus: Schließen des Werkzeugs mit einer Schließkraft, die gegenüber der nominalen Ausgangs-Schließkraft um eine vorgegebene Kraftdifferenz reduziert ist, und Erfassung der hierdurch hervorgerufenen Werkzeugverformung und Berechnung der durch die Werkzeugverformung eingebrachten Verformungsarbeit;

c) Aufzeichnung der ermittelten Verformungsarbeiten über der Schließkraft, Durchführung einer linearen Extrapolation des Verlaufs der Verformungsarbeiten über der Schließkraft und Ermittlung einer reduzierten Schließkraft, die bei einem vorgegebenen prozentualen Wert einer der zuvor ermittelten Verformungsarbeiten liegt, wobei der vorgegebene prozentuale Wert der Verformungsarbeit bei höchstens 20 % der zuvor ermittelten Verformungsarbeit liegt;

d) Durchführung des nachfolgenden weiteren Fertigungszyklus mit der ermittelten reduzierten Schließkraft.

Bevorzugt werden nicht nur, wie erläutert, zwei Ermittlungen der Verformungsarbeiten vorgenommen, sondern deren drei. In diesem Falle wird nach obigem Schritt b) und vor obigem Schritt c) der Schritt durchgeführt:

b1) in einem Schritt b) nachfolgenden weiteren Fertigungszyklus: Schließen des Werkzeugs mit einer Schließkraft, die gegenüber der Schließkraft bei der Durchführung von Schritt b) um eine vorgegebene Kraftdifferenz reduziert ist, und Erfassung der hierdurch hervorgerufenen Werkzeugverformung und Berechnung der durch die Werkzeugverformung eingebrachten Verformungsarbeit,

wobei die weitere ermittelte Verformungsarbeit bei der Durchführung von Schritt c) bei der linearen Extrapolation des Verlaufs der Verformungsarbeiten über der Schließkraft berücksichtigt wird.

Schließlich kann optional auch noch ein vierter Wert der Verformungsarbeit in die Berechnung einbezogen werden, wobei dann nach obigem Schritt b1) und vor Schritt c) der Schritt durchgeführt wird:

b2) in einem Schritt b1) nachfolgenden weiteren Fertigungszyklus: Schließen des Werkzeugs mit einer Schließkraft, die gegenüber der Schließkraft bei der Durchführung von Schritt b1) um eine weitere vorgegebene Kraftdifferenz reduziert ist, und Erfassung der hierdurch hervorgerufenen Werkzeugverformung und Berechnung der durch die Werkzeugverformung eingebrachten Verformungsarbeit,

wobei die weitere ermittelte Verformungsarbeit bei der Durchführung von Schritt c) bei der linearen Extrapolation des Verlaufs der Verformungsarbeiten über der Schließkraft berücksichtigt wird.

Die lineare Extrapolation erfolgt insbesondere durch eine Gerade, die durch lineare Regression der Werte der Verformungsarbeiten über der Schließkraft ermittelt wird.
Die genannte Kraftdifferenz liegt bevorzugt zwischen 25 kN und 75 kN, besonders bevorzugt zwischen 40 kN und 60 kN.
Das Verfahren wird insbesondere in einer Spritzgießmaschine durchgeführt.
Die vorgeschlagene Lösung stellt somit auf die Betrachtung der Verformungsarbeit des Werkzeugs ab, um die optimale Schließkraft zu bestimmen.
Die Verformungsarbeit $\Delta W$ des Werkzeugs, die bei der Beaufschlagung des geschlossenen Werkzeugs mit der Schließkraft aufgebracht wird, ergibt sich zu:

$$\Delta W = \frac{k_M \cdot \left( \Delta s_{C1}{}^2 - \Delta s_C{}^2 \right)}{2}$$

mit

$$\Delta s_{C1} = s_{C1} - s_{F0}$$

und

$$\Delta s_C = \Delta s_{C1} - s_C - s_{F0}$$

Hierbei ist

$k_M$ die Federkonstante des Werkzeugs,
$S_{c1}$ die Position der Schließeinheit vor dem Einspritzen des Kunststoffmaterials in das Werkzeug, aber nach dem Schließkraftaufbau,
$S_{F0}$ die Position der kraftfrei geschlossenen Schließeinheit und
$S_C$ die minimal gemessene Position der Schließeinheit ab dem Einspritzstart während des Produktionszyklus. Die minimale gemessene Position tritt üblicherweise in der Nachdruckphase auf.

Die Federkonstante $k_M$ des Werkzeugs kann über die Gleichung

$$k_M = \frac{F_{C1} - F_{F0}}{\Delta s_{C1}}$$

bestimmt werden.

$F_{C1}$ ist die vom Maschinenbediener gesetzte Schließkraft zum selben Zeitpunkt, an dem $s_{C1}$ vorliegt, d. h. vor dem Einspritzen, aber nach dem Schließkraftaufbau.

$F_{F0}$ ist die Schließkraft zum selben Zeitpunkt, an dem $S_{F0}$ vorliegt, d. h. bei kraftfrei geschlossener Schließeinheit.

Die vorliegende Erfindung geht davon aus, dass die optimale Schließkraft dann gefunden ist, wenn die Arbeitsdifferenz positiv ist, allerdings nahe bei Null liegt.

Das vorgeschlagene Verfahren stellt also auf das Auffinden der optimalen Schließkraft auf der genannten Basis ab, d. h. durch lineare Extrapolation wird für die Arbeitsdifferenz ein positiver Wert nahe Null aufgesucht.

Die Kunststoffverarbeitungsmaschine, insbesondere die Spritzgießmaschine, ist dabei mit den erforderlichen Messelementen versehen, um Kräfte und Verschiebungen ermitteln zu können.

Demgemäß kann die gegebene Schließkraft $F_{C1}$ mittels Kraftsensoren gemessen werden.

Weiterhin wird mit Wegmesselementen die Position der Schließeinheit erfasst (beispielsweise in Abtastschritten der Software, die alle 2 ms erfolgt).

Somit kann die (mittlere) Position der kraftfrei geschlossenen Schließeinheit $s_{F0}$ erfasst werden, gleichermaßen auch die (mittlere) Kraft $F_{F0}$ bei kraftfrei geschlossener Schließeinheit.

Erfasst werden kann weiter die (mittlere) Position $s_{c1}$ der Schließeinheit vor dem Einspritzen aber nach dem Schließkraftaufbau.

Somit kann die Differenz $\Delta s_{C1}$ zwischen der gemessenen Position der Schließeinheit $s_{c1}$ kurz vor dem Einspritzen, aber nach dem Schließkraftaufbau der kraftfrei geschlossenen Schließeinheit $s_{F0}$ ermittelt werden.

Aus der obigen Beziehung kann auch die Federkonstante $k_M$ des Werkzeugs bestimmt werden.

Weiterhin kann die Differenz $\Delta s_C$ zwischen der minimalen Position der Schließeinheit ab Einspritzstart $s_c$ und der Position der kraftfrei geschlossenen Schließeinheit $s_{F0}$ bestimmt werden.

Aus diesen genannten Größen kann dann die Differenz der Verformungsarbeit $\Delta W$ ermittelt werden.

Die Position der Schließeinheit kann über einen serienmäßig eingebauten Wegaufnehmer gemessen werden. Um robuste und valide Werte für die Position der Schließeinheit zu gewinnen, ist eine Verstärkung des Signals über einen Operationsverstärker vorteilhaft.

Das vorgeschlagene Verfahren findet demgemäß die optimale Schließkraft während des normalen Produktionsprozesses. Es ist somit kein Trockenlauf notwendig.

Zu dem oben beschriebenen Verfahren zum Finden der optimalen Schließkraft lässt sich alternativ oder additiv auch ein Verfahren zur Regelung des Öffnungsweges durchführen bzw. hinzunehmen:

In diesem Falle definiert der Bediener einen Wert für $\Delta s_C$, die Software rechnet um auf eine Soll-Differenz der Verformungsarbeit. Die Soll-Schließkraft wird durch lineare Approximation aus der Soll-Differenz der Verformungsarbeit abgeleitet.

Sollten zu wenig Datenpunkte für eine lineare Regression vorhanden sein, werden auf Basis der aktuellen Schließkraft (z. B.) zwei Messungen mit jeweils um einen vorgegebenen Differenzwert (z. B. 50 kN) steigender Schließkraft durchgeführt. Dabei werden (z. B.) drei Differenzarbeiten aufgenommen, nämlich bei

- der aktuell gesetzten Schließkraft ($\Delta W_1$),

- bei der aktuell gesetzten Schließkraft + Differenzwert (z. B. 50 kN) ($\Delta W_2$),

- bei der aktuell gesetzten Schließkraft + nochmaligem Differenzwert (z. B. 100 kN) ($\Delta W_3$).

Dann erfolgt eine iterative Anpassung der Schließkraft mit automatischer Schrittweitenanpassung, bis $\Delta s_C$ erreicht wurde.

Sollte bereits das oben erläuterte Verfahren zum Finden der optimalen Schließkraft abgeschlossen sein, vereinfacht sich das Verfahren zur Regelung des Öffnungsweges deutlich. Hier sind bereits ausreichend Datenpunkte vorhanden, um ein lineares Regressionsmodell zu bilden.

In der Zeichnung ist ein Ausführungsbeispiel der Erfindung dargestellt.

Fig. 1    zeigt schematisch für drei aufeinanderfolgende Spritzgießzyklen die Verformungsarbeit des Werkzeugs bei abnehmenden Schließkräften, wobei die Verformungsarbeit in Form einer Energiedifferenz über der Schließkraft des Werkzeugs aufgetragen wurde,

Fig. 2    zeigt schematisch auf der Basis der Darstellung gemäß Figur 1 eine Regressionsgerade, die durch die ermittelten drei Werte für die Verformungsarbeit gelegt wurde und deren Schnittpunkt mit einem vorgegebenen prozentualen Wert der Verformungsarbeit, um eine reduzierte Schließkraft aufzufinden,

Fig. 3    zeigt schematisch in der Darstellung gemäß Figur 2 eine verbesserte Regressionsgerade, wobei ein vierter Wert für die Verformungsarbeit berücksichtigt wurde,

Fig. 4    zeigt für eine Ausführungsform des vorgeschlagenen Verfahrens den Ablauf der Datenaufnahme,

Fig. 5    zeigt für eine Ausführungsform des vorgeschlagenen Verfahrens das Auffinden einer optimalen Schließkraft und

Fig. 6    zeigt für eine Ausführungsform des vorgeschlagenen Verfahrens die iterative Verminderung der Schließkraft, um deren optimalen Wert zu finden.

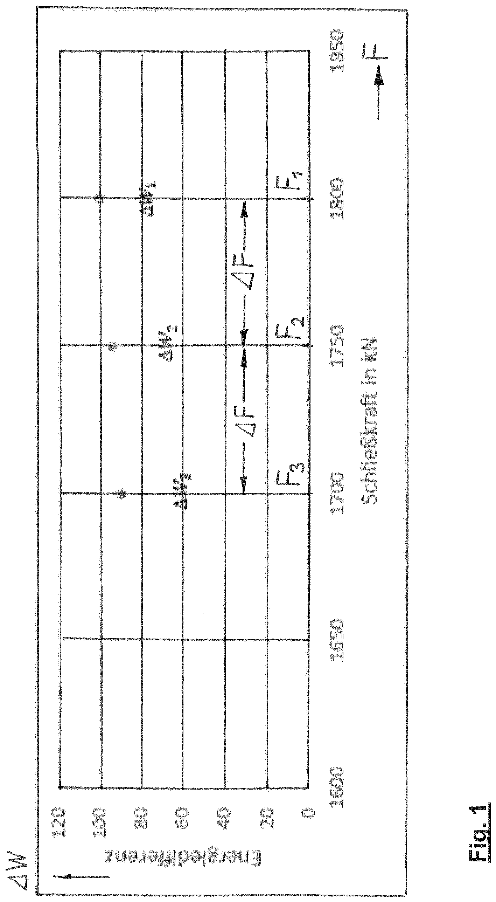

In Figur 1 ist der Beginn des vorgeschlagenen Verfahrens zum Auffinden einer optimalen Schließkraft des Werkzeugs einer Spritzgießmaschine illustriert. In dem hier dargestellten Koordinatensystem ist auf der Abszisse die Schließkraft F des Werkzeugs aufgetragen und auf der Ordinate die Energiedifferenz $\Delta W$ gemäß der oben angegebenen Formel.

Hiernach ergibt sich zunächst bei einem nominalen Ausgangszustand mit einer nominalen Schließkraft $F_1$ ein Wert von $\Delta W_1$ für die Energiedifferenz. Im Ausführungsbeispiel wurde hierzu als Ausgangszustand eine Schließkraft in Höhe von 1.800 kN gewählt; dieser Wert kann insbesondere der maximalen Schließkraft des Werkzeugs entsprechen. Mit dieser Schließkraft wurde ein erster Fertigungszyklus durchgeführt, d. h. die Produktion eines Spritzgieß-Formteils.

Es sei hierzu erwähnt, dass das beschriebene Verfahren natürlich auch eingesetzt werden kann, nachdem bereits eine Anzahl von Formteilen hergestellt wurden. Insofern ist der Begriff des ersten Fertigungszyklus dahingehend zu verstehen, dass es der erste Zyklus ist, mit dem das vorgeschlagene Verfahren startet.

Bei einem nachfolgenden Arbeitszyklus, insbesondere bei dem sich unmittelbar anschließenden Arbeitszyklus, wird dann mit einer reduzierten Schließkraft $F_2$ gearbeitet. Die Schließkraft wird also um einen Betrag $\Delta F$ herabgesetzt, der im Ausführungsbeispiel 50 kN beträgt. Nunmehr ergibt sich in gleicher Weise ein Wert $\Delta W_2$ für die ins Werkzeug eingebrachte Verformungsarbeit (Differenzarbeit).

Bei einem weiteren nachfolgenden Arbeitszyklus, der sich insbesondere an den beschriebenen zweiten Arbeitszyklus anschließt, wird dann mit einer nochmals reduzierten Schließkraft $F_3$ gearbeitet. Wiederum ist diese um einen Betrag $\Delta F$ herabgesetzt, der hier auch wieder 50 kN beträgt. Es ergibt sich analog ein Wert $\Delta W_3$ für die ins Werkzeug eingebrachte Verformungsarbeit.

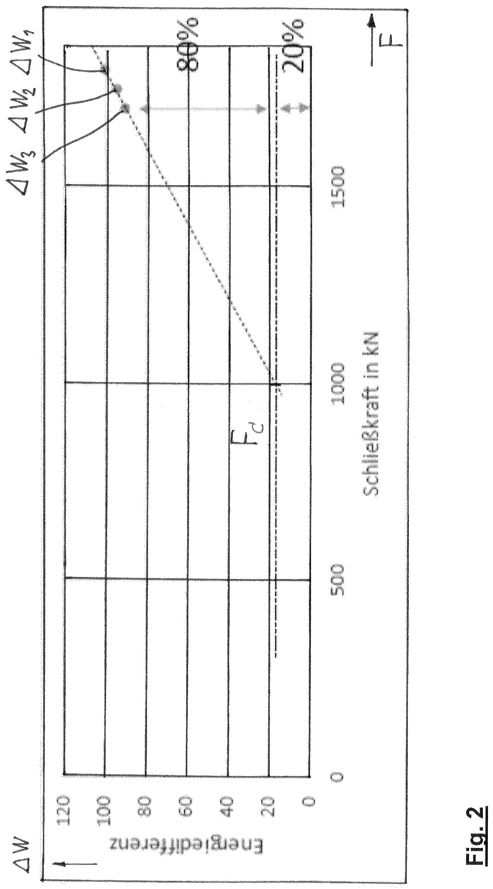

Nach Aufnahme der im vorliegenden Ausführungsbeispiel ermittelten drei Werte erfolgt eine Auswertung, die in Figur 2 illustriert ist:
Die ermittelten Verformungsarbeiten $\Delta W_1$, $\Delta W_2$ und $\Delta W_3$ werden in dem besagten und dargestellten Schließkraft-Energiedifferenz-Diagramm dargestellt und eine lineare Extrapolation des Verlaufs der Verformungsarbeiten über der Schließkraft vorgenommen. Hierfür wird bevorzugt eine lineare Regression durchgeführt, d. h. es wird eine "Ausgleichsgerade" durch die drei erfassten Werte für $\Delta W$ ermittelt. Dieses Vorgehen ist als solches hinlänglich bekannt, so dass es hier nicht weiter erläutert werden muss.

Gemäß der linearen Regression ist die Energiedifferenz $\Delta W$ proportional zur Schließkraft F, also

$$\Delta W \sim F_C$$

bzw.

$$\Delta W = \alpha \cdot F_C + \beta$$

wobei durch die lineare Regression die Koeffizienten $\alpha$ und $\beta$ bestimmt werden. Nach der Bestimmung der genannten Koeffizienten wird die Schließkraft im Ausführungsbeispiel auf einen Wert von 20 % des zuletzt ermittelten Werts für die Energiedifferenz $\Delta W_3$ reduziert, d. h. die Ausgleichsgerade durch die Punkte $\Delta W_1$, $\Delta W_2$ und $\Delta W_3$ wird mit einer zur Abszisse parallelen Gerade geschnitten, die auf Höhe von 20 % des Werts von $\Delta W_3$ liegt. Die hierbei aufgefundene reduzierte Schließkraft ist in Figur 2 mit $F_C$ bezeichnet. Mathematisch ausgedrückt gilt demgemäß für $F_C$

$$F_C = \frac{0{,}2 \cdot \Delta W_3 - \beta}{\alpha}$$

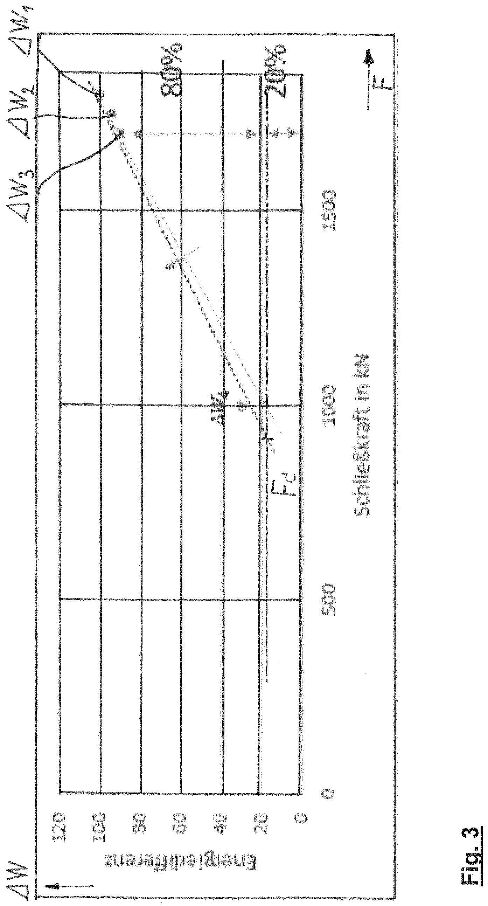

Mit der so aufgefundenen reduzierten Schließkraft $F_C$ wird dann ein neuer Spritzgießzyklus begonnen. Auch bei diesem kann wiederum die hervorgerufene Werkzeugverformung erfasst und die durch die Werkzeugverformung eingebrachte Verformungsarbeit $\Delta W_4$ berechnet werden. Dies ist in Figur 3 illustriert.

Wie sich aus Figur 3 ersehen lässt, wird nunmehr erneut eine lineare Regression durchgeführt und die jetzt insgesamt gewonnenen vier Werte $\Delta W_1$, $\Delta W_2$, $\Delta W_3$ und $\Delta W_4$ berücksichtigt. In Figur 3 ist mit einem Pfeil angegeben, dass sich nun die zuvor ermittelte Gerade etwas verschiebt und so ein neuer, verbesserter Wert für die reduzierte Schließkraft $F_C$ ermittelt werden kann. Basis für das Auffinden der reduzierten Schließkraft $F_C$ ist wiederum der Schnittpunkt der Ausgleichsgerade mit der Parallelen zur Abszisse, die bei 20 % des Wertes von $\Delta W_3$ liegt.

Ein verbesserter Wert für die reduzierte Schließkraft ergibt sich hierdurch, weil die erste lineare Extrapolation aufgrund der großen Vorhersagenspannweite (auf der Basis der Werte $\Delta W_1$, $\Delta W_2$ und $\Delta W_3$) noch zu ungenau war; das Ergebnis kann daher verbessert werden, wenn die lineare Regression unter Einbeziehung des Wertes $\Delta W_4$ wiederholt wird.

Im Ausführungsbeispiel wurde die reduzierte Schließkraft auf der Basis eines Wertes von 20 % des Wertes der Energiedifferenz $\Delta W_3$ ermittelt. Generell ist ein noch geringerer Wert als 20 % anzustreben, im Idealfall 5 % der Energiedifferenz von $\Delta W_3$.

Allerdings kann es im Bereich zwischen 20 % und 5 % der Energiedifferenz $\Delta W_3$ leicht passieren, dass die Energiedifferenz negativ wird und dadurch nachteilig ein unkontrolliertes Öffnen des Werkzeugs während des Spritzgießprozesses erfolgt.

Daher wird bevorzugt in diesem Bereich die Schrittweite zur weiteren Reduzierung der Schließkraft iterativ auf der Basis der nachfolgend beschriebenen Vorgehensweise angepasst. Hierdurch werden rasche Änderungen erkannt und berücksichtigt.

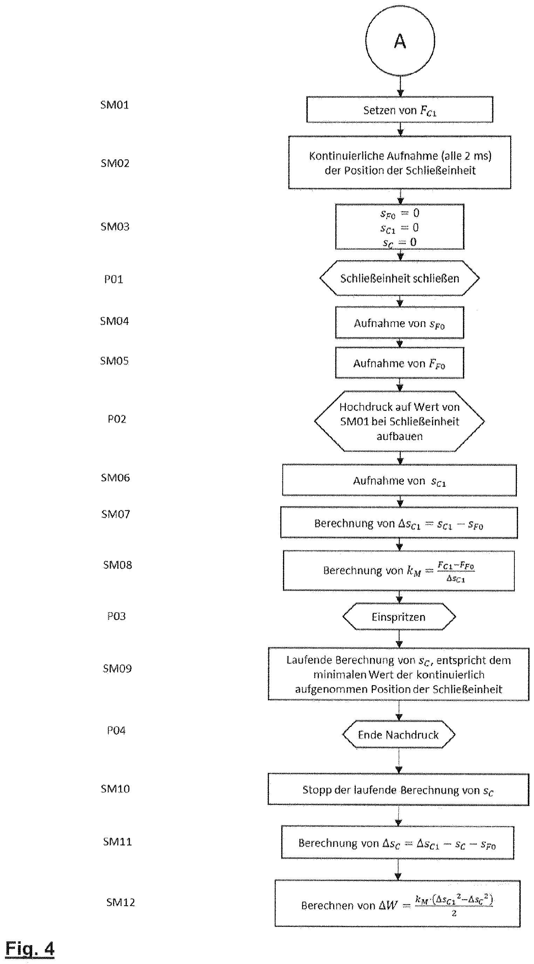

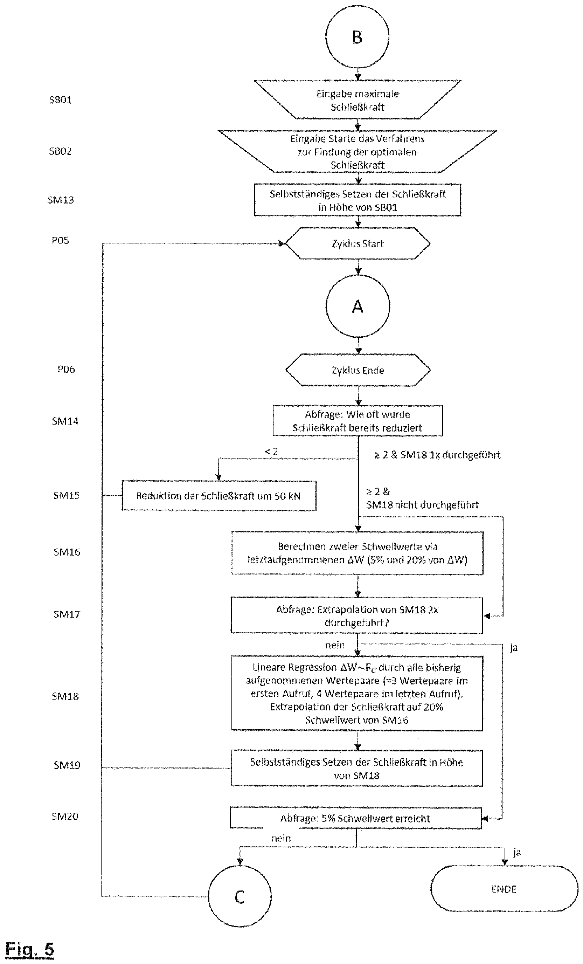

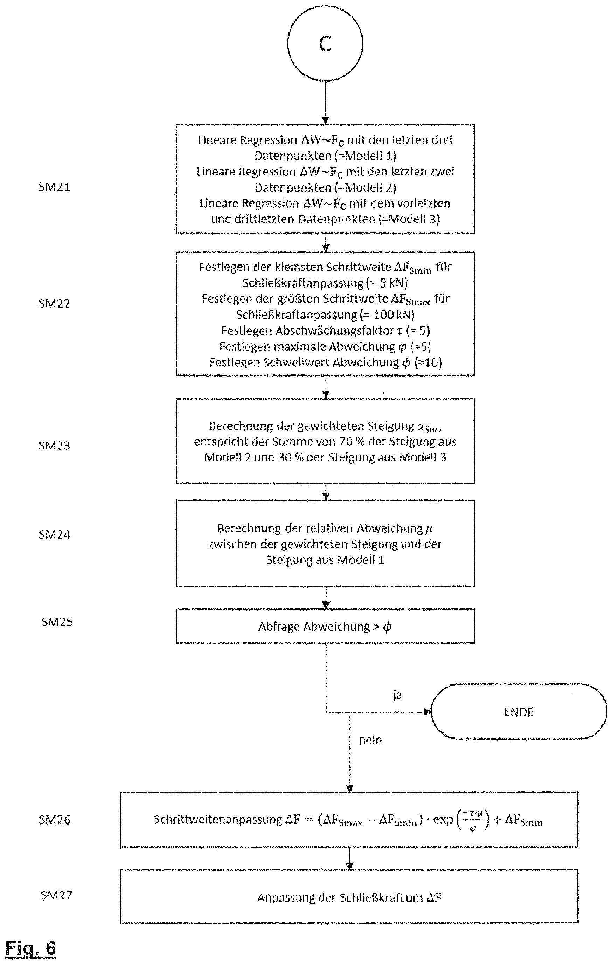

Der gesamte hierfür vorgesehene Algorithmus ist in den Figuren 4, 5 und 6 dargestellt. Hierbei ist in Figur 4 der Ablauf der Datenaufnahme dargestellt, in Figur 5 das Auffinden einer optimalen reduzierten Schließkraft und in Figur 6 das Vorgehen bei der iterativen Verminderung der Schließkraft.

Für die iterative Verminderung der Schließkraft ergibt sich aus Figur 6, dass beim Aufruf dieses Teil-Algorithmus (s. hierzu den Prozessschritt "C" unten links in Figur 5) drei lineare Modelle erstellt werden (s. Schritt "SM21" in Figur 6).

Das erste Modell bestimmt eine Regressionsgerade durch die letzten drei Datenpunktpaare von $\Delta W$ und $F_C$. Das Ergebnis sind die Koeffizienten $\alpha_{S1}$ (Steigung) und $\beta_{S1}$ (Schnittpunkt) für die Regressionsgerade wie oben erläutert.

Das zweite Modell errechnet die Regressionsgerade durch das letzte und vorletzten Datenpunktpaar von $\Delta W$ und $F_C$. Das Ergebnis sind die Koeffizienten $\alpha_{S2}$ (Steigung) und $\beta_{S2}$ (Schnittpunkt) für die Regressionsgerade.

Das dritte Modell legt eine Regressionsgerade durch das vorletzte und drittletzte Datenpunktpaar von $\Delta W$ und $F_C$. Das Ergebnis sind die Koeffizienten $\alpha_{S3}$ (Steigung) und $\beta_{S3}$ (Schnittpunkt) für die Regressionsgerade.

Für die weitere Berechnung sind einige Grenzwerte und Konstanten notwendig. Diese Werte können an der Maschine eingestellt werden. Die angegebenen Werte im Ablaufplan (s. Fig. 6, Schritt "SM22") stellen Standardwerte dar. Die Schrittweite $\Delta F_{Smin}$ bestimmt die kleinstmögliche Veränderung der Schließkraft. Die Schrittweite $\Delta F_{Smax}$ bestimmt die größtmögliche Veränderung der Schließkraft. Der Abschwächungsfaktor $\tau$ und die maximale Abweichung $\varphi$ dienen als Faktoren für die später beschriebene Exponentialfunktion. Der Schwellwert für die relative Abweichung $\phi$ gibt an, ab welchem Wert der relativen Abweichung der Ablauf "C" (gemäß Figur 6) abgebrochen werden soll.

Sind alle drei Modelle erstellt, wird eine gewichte Steigung $\alpha_{Sw}$ errechnet. Diese setzt sich aus der Summe von 70 % der Steigung aus Modell 2 und 30 % der Steigung aus Modell 3 zusammen (s. Schritt "SM23" in Figur 6). Die relative Abweichung $\mu$ (s. hierzu Schritt "SM24" in Figur 6) ergibt sich aus dem Zusammenhang

$$\mu = \frac{\alpha_{Sw}}{\alpha_{S1}} - 1$$

Ist die relative Abweichung $\mu$ größer als der Schwellwert $\phi$, wird davon ausgegangen, dass eine rasche Änderung auftritt. Der Ablauf "C" (gemäß Figur 6) wird abgebrochen, es wird die vorletzte Schließkraft eingestellt. Ist die relative Abweichung kleiner, erfolgt die Schrittweitenanpassung (s. Schritt "SM26" in Figur 6) durch die Gleichung

$$\Delta F = (\Delta F_{Smax} - \Delta F_{Smin}) \cdot \exp\left(\frac{-\tau \cdot \mu}{\varphi}\right) + \Delta F_{Smin}$$

Die neue Schließkraft wird um die Schrittweite angepasst. Der Ablauf wird so oft aufgerufen, bis die 5%-Marke der Differenzarbeit von $\Delta W_3$ erreicht wurde.

Die iterative Verringerung wird maximal zehn Mal wiederholt. Nach dem Auffinden der optimalen Schließkraft stellt sich ein gewisser Wert ($\Delta W_{REF}$) ein. Dieser Wert dient als Referenz für die nachkommenden Prozesszyklen. Sollte in einem der folgenden Zyklen eine unzulässige Abweichung der Differenzarbeit detektiert werden, erfolgt eine zyklusversetzte Anpassung der Schließkraft über die lineare Approximation, um wieder auf das Niveau von $\Delta W_{REF}$ zu kommen.

**Patentansprüche**

1. Verfahren zum Einstellen der Schließkraft eines Werkzeugs einer Kunststoffverarbeitungsmaschine, insbesondere einer Spritzgießmaschine, wobei das Werkzeug eine Federkonstante (k) aufweist, so dass sich bei der Beaufschlagung des Werkzeugs mit der Schließkraft (F) eine Werkzeugverformung ($\Delta s$) ergibt,
   **dadurch gekennzeichnet,**
   **dass** es die folgenden Schritte umfasst:

   a) in einem ersten Fertigungszyklus: Schließen des Werkzeugs mit einer nominalen Ausgangs-Schließkraft ($F_1$) und Erfassung der hierdurch hervorgerufenen Werkzeugverformung ($\Delta s_1$) und Berechnung der durch die Werkzeugverformung eingebrachten Verformungsarbeit ($\Delta W_1$);
   b) in einem nachfolgenden weiteren Fertigungszyklus: Schließen des Werkzeugs mit einer Schließkraft ($F_2$), die gegenüber der nominalen Ausgangs-Schließkraft ($F_1$) um eine vorgegebene Kraftdifferenz ($\Delta F$) reduziert ist, und Erfassung der hierdurch hervorgerufenen Werkzeugverformung ($\Delta s_2$) und Berechnung der durch die Werkzeugverformung eingebrachten Verformungsarbeit ($\Delta W_2$);
   c) Aufzeichnung der ermittelten Verformungsarbeiten ($\Delta W_1$, $\Delta W_2$) über der Schließkraft (F), Durchführung einer linearen Extrapolation des Verlaufs der Verformungsarbeiten ($\Delta W_1$, $\Delta W_2$) über der Schließkraft (F) und Ermittlung einer reduzierten Schließkraft ($F_C$), die bei einem vorgegebenen prozentualen Wert einer der zuvor ermittelten Verformungsarbeiten ($\Delta W_1$, $\Delta W_2$) liegt, wobei der vorgegebene prozentuale Wert der Verformungsarbeit bei höchstens 20 % der zuvor ermittelten Verformungsarbeit liegt;
   d) Durchführung des nachfolgenden weiteren Fertigungszyklus mit der ermittelten reduzierten Schließkraft ($F_C$).

2. Verfahren nach Anspruch 1, **dadurch gekennzeichnet, dass** nach Schritt b) und vor Schritt c) gemäß Anspruch 1 der Schritt durchgeführt wird:

   b1) in einem Schritt b) nachfolgenden weiteren Fertigungszyklus: Schließen des Werkzeugs mit einer Schließkraft ($F_3$), die gegenüber der Schließkraft ($F_2$) bei der Durchführung von Schritt b) um eine vorgegebene Kraftdifferenz ($\Delta F$) reduziert ist, und Erfassung der hierdurch hervorgerufenen Werkzeugverformung ($\Delta s_3$) und Berechnung der durch die Werkzeugverformung eingebrachten Verformungsarbeit ($\Delta W_3$),
   wobei die weitere ermittelte Verformungsarbeit ($\Delta W_3$) bei der Durchführung von Schritt c) gemäß Anspruch 1 bei der linearen Extrapolation des Verlaufs der Verformungsarbeiten ($\Delta W_1$, $\Delta W_2$, $\Delta W_3$) über der Schließkraft (F) berücksichtigt wird.

3. Verfahren nach Anspruch 2, **dadurch gekennzeichnet, dass** nach Schritt b1) gemäß Anspruch 2 und vor Schritt c) gemäß Anspruch 1 der Schritt durchgeführt wird:

   b2) in einem Schritt b1) nachfolgenden weiteren Fertigungszyklus: Schließen des Werkzeugs mit einer Schließkraft ($F_4$), die gegenüber der Schließkraft ($F_3$) bei der Durchführung von Schritt b1) um eine weitere vorgegebene Kraftdifferenz reduziert ist, und Erfassung der hierdurch hervorgerufenen Werkzeugverformung ($\Delta s_4$) und Berechnung der durch die Werkzeugverformung eingebrachten Verformungsarbeit ($\Delta W_4$),
   wobei die weitere ermittelte Verformungsarbeit ($\Delta W_4$) bei der Durchführung von Schritt c) gemäß Anspruch 1 bei der linearen Extrapolation des Verlaufs der Verformungsarbeiten ($\Delta W_1$, $\Delta W_2$, $\Delta W_3$, $\Delta W_4$) über der Schließkraft (F) berücksichtigt wird.

4. Verfahren nach Anspruch 2 oder 3, **dadurch gekennzeichnet, dass** die lineare Extrapolation durch eine Gerade erfolgt, die durch lineare Regression der Werte der Verformungsarbeiten ($\Delta W_1$, $\Delta W_2$, $\Delta W_3$, $\Delta W_4$) über der Schließkraft (F) ermittelt wird.

5. Verfahren nach einem der Ansprüche 1 bis 4, **dadurch gekennzeichnet, dass** die Kraftdifferenz ($\Delta F$) zwischen 25 kN und 75 kN beträgt, vorzugsweise zwischen 40 kN und 60 kN.

6. Verfahren nach einem der Ansprüche 1 bis 5, **dadurch gekennzeichnet, dass** es in einer Spritzgießmaschine durchgeführt wird.

**Claims**

1.  Method for adjusting the closing force of a mold of a plastics processing machine, in particular an injection molding machine, wherein the mold has a spring constant (k), so that a mold deformation ($\Delta s$) results when the mold is subjected to the closing force (F),
    **characterized in**
    **that** the method comprises the following steps:

    a) in a first production cycle: Closing the mold with a nominal initial closing force ($F_1$) and recording the mold deformation ($\Delta s_1$) caused by this and calculating the deformation work ($\Delta W_1$) introduced by the mold deformation;
    b) in a subsequent further production cycle: Closing the mold with a closing force ($F_2$) which is reduced relative to the nominal initial closing force ($F_1$) by a predetermined force difference ($\Delta F$) and recording the mold deformation ($\Delta s_2$) caused thereby and calculating the deformation work ($\Delta W_2$) introduced by the mold deformation;
    c) Recording the determined deformation works ($\Delta W_1$, $\Delta W_2$) versus the closing force (F), performing a linear extrapolation of the course of the deformation works ($\Delta W_1$, $\Delta W_2$) versus the closing force (F), and determining a reduced closing force ($F_C$) which is at a predetermined percentage value of one of the previously determined deformation works ($\Delta W_1$, $\Delta W_2$), wherein the predetermined percentage value of the deformation work is at most 20 % of the previously determined deformation work;
    d) Execution of the subsequent further production cycle with the determined reduced clamping force ($F_C$).

2.  Method according to claim 1, **characterized in that** after step b) and before step c) according to claim 1 the step is performed:

    b1) in a subsequent further production cycle following step b): Closing the mold with a closing force ($F_3$) which is reduced by a predetermined force difference ($\Delta F$) compared with the closing force ($F_2$) during the execution of step b) and recording the mold deformation ($\Delta s_3$) caused thereby and calculating the deformation work ($\Delta W_3$) introduced by the mold deformation,
    wherein the further determined deformation work ($\Delta W_3$) is taken into account in the linear extrapolation of the course of the deformation work ($\Delta W_1$, $\Delta W_2$, $\Delta W_3$) versus the closing force (F) when carrying out step c) according to claim 1.

3.  Method according to claim 2, **characterized in that** after step b1) according to claim 2 and before step c) according to claim 1 the step is carried out:

    b2) in a subsequent further production cycle following step b1): Closing the mold with a closing force ($F_4$) which is reduced by a further predetermined force difference compared with the closing force ($F_3$) during the execution of step b1) and recording the mold deformation ($\Delta s_4$) caused thereby and calculating the deformation work ($\Delta W_4$) introduced by the mold deformation,
    wherein the further determined deformation work ($\Delta W_4$) is taken into account in the linear extrapolation of the course of the deformation work ($\Delta W_1$, $\Delta W_2$, $\Delta W_3$, $\Delta W_4$) versus the closing force (F) when carrying out step c) according to claim 1.

4.  Method according to claim 2 or 3, **characterized in that** the linear extrapolation is performed by a straight line determined by linear regression of the values of the deformation works ($\Delta W_1$, $\Delta W_2$, $\Delta W_3$, $\Delta W_4$) versus the closing force (F).

5.  Method according to one of claims 1 to 4, **characterized in that** the force difference ($\Delta F$) is between 25 kN and 75 kN, preferably between 40 kN and 60 kN.

6.  Method according to one of claims 1 to 5, **characterized in that** it is carried out in an injection molding machine.

**Revendications**

1.  Procédé de réglage de la force de fermeture d'un outil d'une machine de traitement des matières plastiques, en particulier d'une machine de moulage par injection, l'outil présentant une raideur de ressort (k), de sorte qu'une déformation d'outil ($\Delta s$) soit obtenue lorsque l'outil est soumis à la force de fermeture (F), **caractérisé en ce qu'**il comprend les étapes suivantes :

a) dans un premier cycle de fabrication : fermeture de l'outil par une force de fermeture initiale nominale ($F_1$) et détection de la déformation d'outil ($\Delta s_1$) ainsi provoquée et calcul du travail de déformation ($\Delta W_1$) introduit par la déformation d'outil ;

b) dans un autre cycle de fabrication subséquent : fermeture de l'outil avec une force de fermeture ($F_2$) qui est réduite d'une différence de force prédéfinie ($\Delta F$) par rapport à la force de fermeture initiale nominale ($F_1$), et détection de la déformation d'outil ($\Delta s_2$) ainsi provoquée et calcul du travail de déformation ($\Delta W_2$) introduit par la déformation d'outil ;

c) enregistrement des travaux de déformation déterminés ($\Delta W_1$, $\Delta W_2$) en fonction de la force de fermeture ($F$), mise en œuvre d'une extrapolation linéaire de l'allure des travaux de déformation ($\Delta W_1$, $\Delta W_2$) en fonction de la force de fermeture ($F$) et détermination d'une force de fermeture réduite ($Fc$) qui se trouve à une valeur de pourcentage prédéfinie de l'un des travaux de déformation ($\Delta W_1$, $\Delta W_2$) préalablement déterminés, la valeur de pourcentage prédéfinie du travail de déformation se trouvant à 20 % au plus du travail de déformation préalablement déterminé ;

d) mise en œuvre de l'autre cycle de fabrication subséquent par la force de fermeture réduite déterminée ($Fc$) .

2. Procédé selon la revendication 1, **caractérisé en ce qu'**après l'étape b) et avant l'étape c) selon la revendication 1, l'étape suivante est mise en oeuvre :

b1) dans un autre cycle de fabrication subséquent à l'étape b) : fermeture de l'outil par une force de fermeture ($F_3$) qui est réduite d'une différence de force ($\Delta F$) prédéfinie par rapport à la force de fermeture ($F_2$) lors de la mise en œuvre de l'étape b), et détection de la déformation d'outil ($\Delta S_3$) ainsi provoquée et calcul du travail de déformation ($\Delta W_3$) introduit par la déformation d'outil,

l'autre travail de déformation déterminé ($\Delta W_3$), lors de la mise en œuvre de l'étape c) selon la revendication 1, étant pris en compte lors de l'extrapolation linéaire de l'allure des travaux de déformation ($\Delta W_1$, $\Delta W_2$, $\Delta W_3$) en fonction de la force de fermeture ($F$).

3. Procédé selon la revendication 2, **caractérisé en ce qu'**après l'étape b1) selon la revendication 2 et avant l'étape c) selon la revendication 1, l'étape suivante est mise en oeuvre :

b2) dans un autre cycle de fabrication subséquent à l'étape b1) : fermeture de l'outil par une force de fermeture ($F_4$) qui est réduite d'une différence de force prédéfinie par rapport à la force de fermeture ($F_3$) lors de la mise en œuvre de l'étape b1), et détection de la déformation d'outil ($\Delta S_4$) ainsi provoquée et calcul du travail de déformation ($\Delta W_4$) introduit par la déformation d'outil,

l'autre travail de déformation déterminé ($\Delta W_4$), lors de la mise en œuvre de l'étape c) selon la revendication 1, étant pris en compte lors de l'extrapolation linéaire de l'allure des travaux de déformation ($\Delta W_1$, $\Delta W_2$, $\Delta W_3$, $\Delta W_4$) en fonction de la force de fermeture ($F$).

4. Procédé selon la revendication 2 ou 3, **caractérisé en ce que** l'extrapolation linéaire s'effectue par une ligne droite qui est déterminée par régression linéaire des valeurs des travaux de déformation ($\Delta W_1$, $\Delta W_2$, $\Delta W_3$, $\Delta W_4$) en fonction de la force de fermeture ($F$).

5. Procédé selon l'une des revendications 1 à 4, **caractérisé en ce que** la différence de force ($\Delta F$) vaut entre 25 kN et 75 kN, de préférence entre 40 kN et 60 kN.

6. Procédé selon l'une des revendications 1 à 5, **caractérisé en ce qu'**il est mis en œuvre dans une machine de moulage par injection.

**Fig. 1**

EP 4 151 386 B1

**Fig. 2**

Fig. 3

**Fig. 4**

**Fig. 5**

$$C$$

**SM21**

Lineare Regression $\Delta W \sim F_C$ mit den letzten drei Datenpunkten (=Modell 1)
Lineare Regression $\Delta W \sim F_C$ mit den letzten zwei Datenpunkten (=Modell 2)
Lineare Regression $\Delta W \sim F_C$ mit dem vorletzten und drittletzten Datenpunkten (=Modell 3)

**SM22**

Festlegen der kleinsten Schrittweite $\Delta F_{Smin}$ für Schließkraftanpassung (= 5 kN)
Festlegen der größten Schrittweite $\Delta F_{Smax}$ für Schließkraftanpassung (= 100 kN)
Festlegen Abschwächungsfaktor $\tau$ (= 5)
Festlegen maximale Abweichung $\varphi$ (=5)
Festlegen Schwellwert Abweichung $\phi$ (=10)

**SM23**

Berechnung der gewichteten Steigung $\alpha_{Sw}$, entspricht der Summe von 70 % der Steigung aus Modell 2 und 30 % der Steigung aus Modell 3

**SM24**

Berechnung der relativen Abweichung $\mu$ zwischen der gewichteten Steigung und der Steigung aus Modell 1

**SM25**

Abfrage Abweichung > $\phi$

ja → ENDE

nein

**SM26**

Schrittweitenanpassung $\Delta F = (\Delta F_{Smax} - \Delta F_{Smin}) \cdot \exp\left(\frac{-\tau \cdot \mu}{\varphi}\right) + \Delta F_{Smin}$

**SM27**

Anpassung der Schließkraft um $\Delta F$

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014014232 B4
- US 20060197248 A1